# EUROPEAN PATENT APPLICATION

(11) **EP 4 122 890 A1**
(43) Date of publication of application: **25.01.2023**
(21) Application number: 21210044.0
(22) Date of filing: 23.11.2021
(51) Int. Cl.: C01G 53/00, H01M 4/00

(54) **POSITIVE ACTIVE MATERIAL FOR AN ALL-SOLID-STATE BATTERY, METHOD OF PREPARING THE SAME, AND ALL-SOLID-STATE BATTERY**

(30) Priority: 23.07.2021 KR 20210097217
(71) Applicant: Samsung SDI Co., Ltd., Yongin-si, Gyeonggi-do 17084 (KR)
(72) Inventor: YUN, Pilsang, 17084 Yongin-si (KR); KIM, Hyunbeom, 17084 Yongin-si (KR); PARK, Sangin, 17084 Yongin-si (KR); SUH, Kwang Jong, 17084 Yongin-si (KR); YOU, Yongchan, 17084 Yongin-si (KR)
(74) Representative: Marks & Clerk LLP

(57) **Abstract**

Disclosed are a positive active material for an all-solid-state battery, a method of preparing the same, and an all-solid-state battery including the same. The positive active material includes secondary particles in which a plurality of primary particles is aggregated, wherein at least a portion of the primary particles is arranged radially, and includes a first boron coating portion on a surface of the secondary particles, and a second boron coating portion on a surface of the primary particles inside the secondary particles.

## Description

### BACKGROUND

### 1. Field

A positive active material for an all-solid-state battery, a method of preparing the same, and an all-solid-state battery are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

An all-solid-state battery among rechargeable lithium batteries refers to a battery in which all materials are solid, and in particular, a battery using a solid electrolyte. This all-solid-state battery is safe with no risk of explosion due to leakage of the electrolyte and also easily manufactured into a thin battery.

Recently, various positive active materials that may be applied to this all-solid-state battery are being studied. Lithium nickel oxide, lithium nickel manganese cobalt composite oxide, lithium nickel cobalt aluminium composite oxide, lithium cobalt oxide, and the like, which have been conventionally used, are mainly being studied but have a limit in realizing satisfactory performance of the all-solid-state battery. Accordingly, development of a new positive active material is required to realize an all-solid-state battery securing long-term cycle-life characteristics as well as realizing high capacity and a high energy density.

### SUMMARY

A positive active material for an all-solid-state battery with improved cycle-life characteristics while implementing a high capacity, a preparing method thereof and an all-solid-state battery including the same are provided.

In an embodiment, a positive active material for an all-solid-state battery includes a lithium nickel-based composite oxide, wherein the positive active material includes a secondary particle in which a plurality of primary particles is aggregated, wherein at least a portion of the primary particles is arranged radially, a first boron coating portion on a surface of the secondary particles, and a second boron coating portion on a surface of the primary particles inside the secondary particles.

Each of the first boron coating portion and the second boron coating portion may include boron oxide, lithium borate, or a combination thereof.

A weight of the first boron coating portion may be greater than a weight of the second boron coating portion.

The first boron coating portion may be included in an amount of about 70 wt% to about 98 wt%, and the second boron coating portion may be included in an amount of about 2 wt% to about 30 wt% based on the total amount of the first boron coating portion and the second boron coating portion.

A content of the first boron coating portion may be about 0.02 wt% to about 0.3 wt% based on the positive active material.

A content of the second boron coating portion may be about 0.001 wt% to about 0.05 wt% based on the positive active material.

A total amount of the first boron coating portion and the second boron coating portion may be about 0.1 mol% to about 3 mol%, or about 0.1 mol% to about 1.5 mol%, based on the positive active material.

The primary particles may have a plate shape, and at least a portion of the plate-shaped primary particles may have a long axis arranged in a radial direction.

An average length of the plate-shaped primary particles may be about 150 nm to about 500 nm, an average thickness of the plate-shaped primary particles may be about 100 nm to about 200 nm, and a ratio of the average thickness to the average length may be about 1:2 to about 1:5.

The secondary particles may include an inner portion including an irregular porous structure and an outer portion including a radially arranged structure.

The inner portion of the secondary particle may have a larger pore size than the outer portion, the pore size in the inner portion of the secondary particle may be about 150 nm to about 1 µm, and the pore size in the outer portion of the secondary particle may be less than about 150 nm.

The secondary particles may include open pores having a size of less than about 150 nm on the surface, facing toward the center of the inner portion.

The lithium nickel-based composite oxide may be represented by Chemical Formula 1.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, M¹ and M² are each independently selected from Al, B, Ba, Ca, Ce, Co, Cr, Cu, F, Fe, Mg, Mn, Mo, Nb, P, S, Si, Sr, Ti, V, W, Zr, and a combination thereof.

In another embodiment, a method of preparing a positive active material for an all-solid-state battery includes mixing a lithium raw material, a nickel-based hydroxide, and a boron raw material and heat-treating the resultant.

A content of the boron raw material may be about 0.1 mol% to about 3 mol% based on 100 mol% of the nickel-based hydroxide.

The heat-treating may be performed at a temperature of about 650 °C to about 850 °C for about 5 hours to about 20 hours.

Another embodiment provides an all-solid-state battery including a positive electrode including the positive active material, a negative electrode, and a solid electrolyte between the positive electrode and the negative electrode.

At least some of the above and other features of the invention are set out in the claims.

The positive active material for an all-solid-state battery according to an embodiment and an all-solid-state battery including the same may exhibit excellent cycle-life characteristics while realizing high capacity and high energy density.

### BRIEF DESCRIPTION OF THE DRAWINGS

FIG. 1 is a schematic view showing the shape of a plate-shaped primary particle according to an embodiment.
FIG. 2 is a view for explaining the definition of a radial arrangement in secondary particles according to an embodiment.
FIG. 3 is a schematic view showing a cross-sectional structure of a secondary particle according to an embodiment.
FIG. 4A is a cross-sectional view schematically illustrating an all-solid-state battery according to an embodiment.
FIG. 4B is a cross-sectional view schematically illustrating an all-solid-state battery according to an embodiment.
FIG. 5 is a scanning electron microscopic photograph of a fracture surface of a precursor of the positive active material of Example 1.
FIG. 6 is a scanning electron microscopic photograph of a cross-section of the positive active material of Example 1.
FIG. 7 is a scanning electron microscopic photograph of a cross-section of the positive active material of Example 2.
FIG. 8 is a scanning electron microscopic photograph of a cross-section of the positive active material of Comparative Example 2.
FIG. 9 is a ToF-SIMS analysis photograph of the positive active material of Example 1.
FIG. 10 is a mass spectrum result of the Time-of-Flight Secondary Ion Mass Spectrometry (ToF-SIMS) analysis of the positive active material of Example 1.
FIG. 11 is an X-ray spectroscopy (XPS) results of the positive active material of Examples 1, 2 and the positive active material of Example 1 after washing.
FIG. 12 is a cycle-life evaluation result for all-solid-state battery cells of examples and comparative examples.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

### Positive Active Material

An embodiment provides a positive active material for an all-solid-state battery including a lithium nickel-based composite oxide, wherein the positive active material includes secondary particles in which a plurality of primary particles is aggregated, wherein at least a portion of the primary particles is arranged radially, a first boron coating portion on a surface of the secondary particles, and a second boron coating portion on a surface of the primary particles inside the secondary particles.

The all-solid-state battery has a problem of not properly expressing capacity due to high resistance occurring at the interface between the positive active material and the solid electrolyte. The reason is that an impurity layer is formed by a chemical reaction of the positive active material and the solid electrolyte, or a space charge layer is formed according to a contact of the solid positive active material with the solid electrolyte. In order to solve this problem, technology of forming a buffer layer having lithium ion conductivity at the interface between the positive active material and the solid electrolyte has been developed. However, in order to form the buffer layer, a sol-gel method using an organic solvent, a spray drying method, an atomic layer deposition method, or the like should be used but incurs an excessive process cost and thus has a limit to practical application to mass production.

The positive active material according to an embodiment may be coated with a lithium boron composite and the like on the surface of the secondary particles and at the inner grain boundaries without a separate process of forming the buffer layer, suppressing interface resistance between the positive active material and the solid electrolyte and thereby, realizing high capacity. In addition, since the lithium boron composite and the like may be coated at the inner grain boundaries as well as on the surface of the secondary particles, the positive active material maintains the buffer layer despite the volume changes according to charges and discharges, thereby realizing long-term cycle-life characteristics.

The positive active material includes a first boron coating portion on the surface of the secondary particles and a second boron coating portion on the surface of the primary particles in the inner portion of the secondary particles. The first boron coating portion and the second boron coating portion include a boron compound. The boron compound may include, for example boron oxide, lithium borate, or a combination thereof, for example B₂O₂, B₂O₃, B₄O₃, B₄O₅, LiBO₂, Li₂B₄O₇, Li₃BO₃, or a combination thereof.

The second boron coating portion is present in the inner portion rather than the surface of the secondary particle, and it is coated along the interface of the primary particles in the inner portion of the secondary particle, and thus it may be expressed as being coated at the grain boundary. Here, the inner portion of the secondary particles means the entire interior except for the surface, for example, may mean the entire interior from a depth of approximately 2 µm from the outer surface. It can also be expressed as an inaccessible part of distilled water when washing the secondary particles of the positive active material with distilled water.

A conventional method of coating boron on a positive active material is in general to mix a boron raw material with a lithium metal composite oxide in a wet or dry method and then, heat-treating them. However, the boron has a problem of acting as resistance on the surface of the positive active material and thus rather deteriorating capacity and a cycle-life. On the contrary, according to an embodiment, a method of injecting the boron raw material along with a lithium source into a precursor in which primary particles are radially oriented and then, heat-treating them may be adopted to provide a positive active material coated with boron at the inner grain boundaries as well as on the surface thereof. Since the boron in an appropriate amount is coated at the inner grain boundaries and simultaneously, on the surface of the positive active material, the boron no longer acts as resistance but secures structural stability of the positive active material, and the positive active material is suppressed from interface resistance with the solid electrolyte, improving capacity characteristics and long-term cycle-life characteristics of a battery.

According to an embodiment, the weight of the first boron coating portion may be greater than the weight of the second boron coating portion. For example, based on the total amount of the first boron coating portion and the second boron coating portion, the second boron coating portion may be included in an amount of about 2 wt% to about 30 wt%, specifically about 3 wt% to about 25 wt%, or about 5 wt% to about 20 wt%, and the first boron coating portion may be included in an amount of about 70 wt% to about 98 wt%, about 75 wt% to about 97 wt%, or about 80 wt% to about 95 wt%. For example, the weight ratio of the first boron coating portion and the second boron coating portion may be about 70:30 to about 98:2, for example, about 70:30 to about 97:3, or about 75:25 to about 95:5. When the content ratio of the first boron coating portion and the second boron coating portion is as described, boron does not act as a resistance in the positive active material and may serve to improve performance, and the positive active material including such a boron coating portion may exhibit improved cycle-life characteristics while implementing a high capacity.

The content of the first boron coating portion may be, for example, about 0.02 wt% to about 0.3 wt%, about 0.03 wt% to about 0.3 wt%, about 0.04 wt% to about 0.2 wt%, or about 0.05 wt% to about 0.1 wt% based on the total weight of the positive active material. The content of the second boron coating portion may be, for example, about 0.001 wt% to about 0.05 wt%, about 0.001 wt% to about 0.04 wt%, about 0.002 wt% to about 0.03 wt%, or about 0.003 wt% to about 0.02 wt% based on the positive active material, but is not limited thereto. When the contents of the first boron coating portion and the second boron coating portion based on the positive active material is as described above, boron may not act as a resistance in the positive active material, and the positive active material including the same may exhibit high capacity and excellent cycle-life characteristics.

A total amount of the first boron coating portion and the second boron coating portion may be about 0.1 mol% to about 3 mol%, for example about 0.1 mol% to about 2.5 mol%, about 0.1 mol% to about 2 mol%, about 0.1 mol% to about 1.5 mol%, about 0.1 mol% to about 1.3 mol%, or about 0.5 mol% to about 1.3 mol% based on 100 mol% of the positive active material. When the total amount of the first boron coating portion and the second boron coating portion is out of a predetermined content, the initial discharge capacity may decrease and cycle-life characteristics may be deteriorated. In particular, if the content of the first boron coating portion on the surface of the secondary particles is excessive, the initial discharge capacity of an all-solid-state battery may be greatly reduced as boron acts as a resistance.

On the other hand, the positive active material includes secondary particles in which at least two primary particles are aggregated, and at least a portion of the primary particles have a radially arranged structure. At least some of the primary particles may have a plate shape. The primary particles may have a thickness smaller than a long axis length. Here, the long axis length means the maximum length with respect to the widest surface of the primary particle. That is, the primary particle may have a structure in which the length (t) in one axial direction (i.e., thickness direction) is smaller than the long axis length (a) in the other direction (i.e., plane direction).

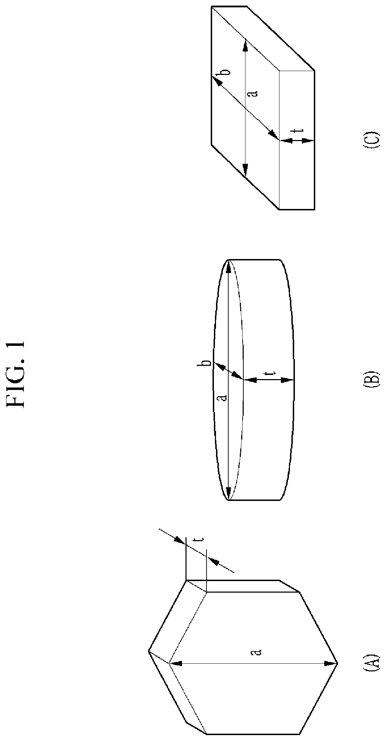

FIG. 1 is a schematic view showing the plate shape of primary particles of a positive active material. Referring to FIG. 1, the primary particles according to an embodiment have various detailed shapes while having a basic plate structure, for example, (A) a polygonal nanoplate shape such as a hexagon, (B) a nanodisk shape, and (C) a rectangular parallelepiped shape. In FIG. 1, "a" means the length of the long axis of the primary particle, "b" means the length of the short axis, and "t" means the thickness. The thickness t of the primary particles may be smaller than the lengths a and b in the plane direction. Among the lengths in the plane direction, a may be longer or equal to b. A direction in which the thickness t is defined in the primary particles is defined as a thickness direction, and a direction having lengths a and b is defined as a plane direction.

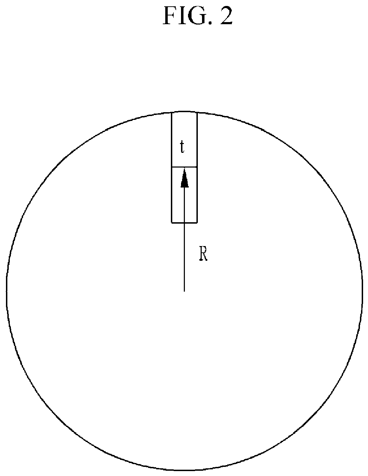

In the positive active material, at least a portion of the primary particles may have a radially arranged structure, and for example, long axes of the primary particles may be arranged in a radial direction. FIG. 2 is a view for explaining the definition of a radial arrangement in secondary particles according to an embodiment. In an embodiment, the radially arranged structure means that, as shown in FIG. 2, the thickness (t) direction of the primary particles is perpendicular to or within an angle of about ±5° of perpendicular to the direction (R) toward the surface from the center of the secondary particles.

At least one part of the primary particles may be oriented radially. That is, all or some of the primary particles in a secondary particle may be radially oriented. For example, the secondary particle may include an outer portion and an inner portion, and the primary particles both in the outer portion and the inner portion may be radially oriented or only the primary particles in the outer portion may be radially oriented. As another example, the secondary particle may include an outer portion in which the primary particles are oriented radially and an inner portion in which the primary particles are irregularly arranged.

The average length of the primary particles of the secondary particle may be about 0.01µm to about 5µm, for example about 0.01µm to about 2µm, about 0.01µm to about 1µm, about 0.02µm to about 1µm, about 0.05µm to about 0.5µm, or about 150 nm to about 500 nm. Here, "average length" means the average length of the long axis length (a) in the plane direction when the primary particles are plate-shaped, and when the primary particle is spherical, it means the average particle diameter.

When the primary particles are plate-shaped, an average thickness of the primary particles may be for example greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, or greater than or equal to about 900 nm, and for example less than or equal to about 5 µm, less than or equal to about 4 µm, less than or equal to about 3 µm, less than or equal to about 2 µm, less than or equal to about 1 µm, less than or equal to about 900 nm, less than or equal to about 800 nm, less than or equal to about 700 nm, less than or equal to about 600 nm, or less than or equal to about 500 nm, for example about 100 nm to about 200 nm. In addition, in the primary particle, a ratio of the average thickness to the average length may be about 1:1 to about 1:10, for example about 1:1 to about 1:8, about 1:1 to about 1:6, or about 1:2 to about 1:5.

The average length and the average thickness of the plate-shaped primary particles may be measured by an optical microscope photograph as follows: 50 primary particles are randomly selected in an SEM image of a cross-section of an active material particle, wherein in a cross-section of a primary particle that has an approximately rectangular shape, the length of the long side is measured to be called a 'length' and the length of the short side is called a 'thickness'.

If the cross-section of the primary particle is close to an ellipse, the length of the long axis is called a 'length' and the length of the short axis is called a 'thickness'.

The arithmetic mean value for about 50 of 'length' measured can be taken as the 'average length', and the arithmetic mean value for about 50 'thickness' measured can be taken as the 'average thickness'.

As described above, when the average length, the average thickness, and the ratio between the average thickness and the average length of the primary particles satisfy the above ranges and the primary particles are radially arranged, it is possible to have relatively many lithium diffusion pathways between grain boundaries on the surface side, and a large number of crystal planes capable of lithium transfer are exposed to the outside, so that lithium diffusion is improved and high initial efficiency and capacity can be secured. In addition, when the primary particles are arranged radially, the pores exposed on the surface are directed toward the center of the secondary particles, thereby promoting diffusion of lithium. Due to the radially arranged primary particles, uniform contraction and expansion are possible when lithium is deintercalated and/or intercalated, and when lithium is deintercalated, pores exist in the (001) direction, which is the direction in which the particles expand, so that they act as a buffer. In addition, due to the size and arrangement of the primary particles, the probability of cracks occurring during contraction and expansion of the active material may be lowered, and the inner pores further alleviate the volume change to reduce the cracks generated between the primary particles during charging and discharging, resulting in improved cycle-life characteristics of an all-solid-state battery and reduced resistance increase phenomenon.

The positive active material may have an irregular porous structure in at least one of the inner portion and the outer portion of the secondary particle. The term "irregular porous structure" may refer to a structure in which the pore sizes and shapes are not regular and do not have uniformity. For example, the secondary particles may include an inner portion including an irregular porous structure and an outer portion including a radially arranged structure. That is, the primary particles in the inner portion may be arranged without regularity, unlike the primary particles in the outer portion. The inner portion containing the irregular porous structure includes primary particles like the outer portion.

The term "outer portion" may refer to a region (e.g., of the particle) within about 30 length% to about 50 length% from the outermost surface, for example, within about 40 length% from the outermost surface with respect to the distance from the center to the surface of the secondary particle, or in some embodiments, may refer to a region within about 2 µm from the outermost surface of the secondary particle. The term "inner portion" may refer to a region (e.g., of the particle) within about 50 length% to about 70 length% from the center, for example, within about 60 length% from the center with respect to the distance from the center to the surface of the secondary particle, or in some embodiments, a region excluding the region within about 2 µm from the outermost surface of the secondary particle.

The secondary particles of the positive active material may include a radially-oriented exterior structure and an irregular porous interior structure, wherein the interior of the secondary particles may have a larger pore size than the exterior. For example, the positive active material may have an inner pore size of about 150 nm to about 1 µm and an outer pore size of less than about 150 nm. In this way, when the inner pore size is larger than the outer pore size, there may be an advantage of shortening a diffusion distance of lithium in the active material, compared with secondary particles having the same inner and outer pore size, and lithium may be easily inserted from the outside, and in addition, there may be an effect of alleviating the volume changes during the charge and discharge. Herein, the pore size means an average diameter when a pore is spherical or circular and a length of a major axis when the pore is oval.

The pore size may be measured by an optical microscope photograph as follows: 50 pores are randomly selected in an SEM image of a cross-section of a secondary particle of an active material. If the cross-section of the pore is close to a circle, its diameter is measured to determine the pore size, and if the cross-section of the pore is close to an oval, a length of its long axis is measured to determine the pore size.

The arithmetic average value of the obtained diameter and/or the length of the long axis can be taken as the average pore size.

The secondary particles of the positive active material may have open pores on the surface. An open pore may refer a pore where at least some of the walls of the pore are open and connected to the outside of a particle. The open pore may have a size of less than about 150 nm, for example, about 10 nm to about 148 nm. Open pores on the surface may be facing toward the center of a secondary particle as they are formed between the radially arranged primary particles. The open pores may be exposed pores into which an electrolyte solution may flow in and out. The open pores may be formed to a depth of less than or equal to about 150 nm, for example, about 0.001 nm to about 100 nm, for example, about 1 nm to about 50 nm on average from the surface of the secondary particles.

The size and depth of the open pore may be measured by the BJH (Barrett, Joyner and Halenda) method, which is a method of deriving from an amount of adsorbed or desorbed nitrogen.

Closed pores may exist in the inner portion of the secondary particle, and closed pores and/or open pores may exist in the outer portion. The closed pores may exclude or mostly exclude an electrolyte, while the open pores may include an electrolyte therein. The closed pores are independent pores that are not connected to other pores because all of the walls of the pores are formed in a closed structure, and the open pores are continuous pores connected to the outside of the particle because at least some of the walls of the pores are formed in an open structure.

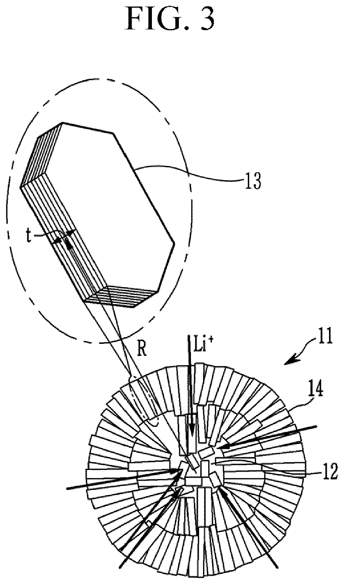

FIG. 3 is a schematic view illustrating a cross-sectional structure of secondary particles of the positive active material. Referring to FIG. 3, the secondary particles 11 of the positive active material according to an embodiment have an outer portion 14 having a structure in which the primary particles 13 having a plate shape are arranged in a radial direction, and an inner portion 12 in which the primary articles 13 are irregularly arranged. The inner portion 12 may have more empty spaces between the primary particles 13 than the outer portion 14. In addition, the pore size and porosity in the inner portion 12 are large and irregular compared with the pore size and porosity in the outer portion 14. In FIG. 3, arrows indicate the movement direction of lithium ions.

In the secondary particle, the inner portion has a porous structure, so that the diffusion distance of lithium ions to the inner portion is reduced, and the outer portion is radially arranged toward the surface, so that lithium ions are easily intercalated into the surface. In addition, since the size of the primary particles is small, it is easy to secure a lithium transfer path between crystal grains. In addition, since the size of the primary particles is small and the pores between the primary particles alleviate the volume change occurring during charging and discharging, the stress caused by the volume change during charging and discharging may be minimized. Such a positive active material may reduce resistance of an all-solid-state battery and improve capacity characteristics and cycle-life characteristics.

On the other hand, in the secondary particles, the plurality of primary particles may have a radial arrangement structure by being arranged toward the "single (1)" center to make surface contact along the thickness direction of the primary particles. Alternatively, the secondary particles may have a "multi-center" radial arrangement structure having a plurality of centers. As such, when the secondary particles have a single-center or multi-center radial arrangement structure, lithium is easily deintercalated and/or intercalated to the center of the secondary particles.

The secondary particles may include radial primary particles and non-radial primary particles. The content of the non-radial primary particles may be less than or equal to about 20 wt%, for example about 0.01 wt% to about 10 wt%, specifically about 0.1 wt% to about 5 wt%, based on 100 parts by weight of the total weight of the radial primary particles and the non-radial primary particles. When non-radial primary particles are included in the above-described content range in addition to the radial primary particles in the secondary particles, an all-solid-state battery with improved cycle-life characteristics may be provided by facilitating the diffusion of lithium.

The positive active material includes a lithium nickel-based composite oxide. The nickel content in the lithium nickel-based composite oxide may be greater than or equal to about 30 mol%, for example greater than or equal to about 40 mol%, greater than or equal to about 50 mol%, greater than or equal to about 60 mol%, greater than or equal to about 70 mol%, greater than or equal to about 80 mol%, or greater than or equal to about 90 mol% and less than or equal to about 99.9 mol%, or less than or equal to about 99 mol% based on the total amount of metals other than lithium (e.g. Al, B, Ba, Ca, Ce, Co, Cr, Cu, Fe, Mg, Mn, Mo, Nb, Si, Sr, Ti, V, W, Zr). For example, the nickel content in the lithium nickel-based composite oxide may be higher than the content of each of other metals such as cobalt, manganese, and aluminium. When the nickel content satisfies the above range, the positive active material may exhibit excellent battery performance while realizing a high capacity.

The lithium nickel-based composite oxide may be represented by Chemical Formula 1.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each independently selected from Al, B, Ba, Ca, Ce, Co, Cr, Cu, F, Fe, Mg, Mn, Mo, Nb, P, S, Si, Sr, Ti, V, W, Zr, and a combination thereof.

For example, in Chemical Formula 1, 0.4≤x1≤1 and 0≤y1≤0.6, 0.5≤x1≤1 and 0≤y1≤0.5, 0.6≤x1≤1 and 0≤y1≤0.4, or 0.7≤x1≤1 and 0≤y1≤0.3, 0.8≤x1≤1 and 0≤y1≤0.2, or 0.9≤x1≤1 and 0≤y1≤0.1.

The lithium nickel-based composite oxide may be, for example, represented by Chemical Formula 2.

[Chemical Formula 2] Liₐ₂Niₓ₂Co_{y2}M³_{1-x2-y2}O₂

In Chemical Formula 2, 0.9≤a2≤1.8, 0.3≤x2<1, 0<y2≤0.7, and M³ is selected from Al, B, Ba, Ca, Ce, Cr, Cu, F, Fe, Mg, Mn, Mo, Nb, P, S, Si, Sr, Ti, V, W, Zr, and a combination thereof.

For example, in Chemical Formula 2, 0.3≤x2≤0.99 and 0.01≤y2≤0.7, 0.4≤x2≤0.99 and 0.01≤y2≤0.6, 0.5≤x2≤0.99 and 0.01≤y2≤0.5, or 0.6≤x2≤0.99 and 0.01≤y2≤0.4, 0.7≤x2≤0.99 and 0.01≤y2≤0.3, 0.8≤x2≤0.99 and 0.01≤y2≤0.2, or 0.9≤x2≤0.99 and 0.01≤y2≤0.1.

The lithium nickel-based composite oxide may be, for example, represented by Chemical Formula 3.

[Chemical Formula 3] Liₐ₃Niₓ₃Co_{y3}M⁴_{z3}M⁵_{1-x3-y3-z3}O₂

In Chemical Formula 3, 0.9≤a3≤1.8, 0.3≤x3≤0.98, 0.01≤y3≤0.69, 0.01≤z3≤0.69, M⁴ is selected from Al, Mn, and a combination thereof, and M⁵ is selected from B, Ba, Ca, Ce, Cr, Cu, F, Fe, Mg, Mo, Nb, P, S, Si, Sr, Ti, V, W, Zr, and a combination thereof.

For example, in Chemical Formula 3, 0.4≤x3≤0.98, 0.01≤y3≤0.59, and 0.01≤z3≤0.59, may be 0.5≤x3≤0.98, 0.01≤y3≤0.49, and 0.01≤z3≤0.49, or 0.6≤x3≤0.98, 0.01≤y3≤0.39, and 0.01≤z3≤0.39, or 0.7≤x3≤0.98, 0.01≤y3≤0.29, and 0.01≤z3≤0.29, or 0.8≤x3≤0.98, 0.01≤y3≤0.19, and 0.01≤z3≤0.19, or 0.9≤x3≤0.98, 0.01≤y3≤0.09, and 0.01≤z3≤0.09.

Generally, as the nickel content in the positive active material is increased, since cation mixing, in which Ni²⁺ ions take lithium sites, also increases, capacity rather decreases, or since diffusion of lithium ions is hindered by impurities such as NiO and the like, a battery cycle-life may be deteriorated, and in addition, the positive active material has a side reaction with an electrolyte due to the structural collapse and cracks during charges and discharges, which may decrease the battery cycle-life and bring about a safety problem. In order to solve these problems, when boron is coated only on the surface of an active material in a conventional method, the boron acts as resistance and rather decreases capacity and deteriorates a cycle-life. On the contrary, the positive active material according to an embodiment, even if a high nickel-based material is used, is coated with boron in an appropriate amount on the surface and at the inner grain boundaries and accordingly, may improve problems due to the high concentration of nickel and thus realize high capacity and simultaneously, improve cycle-life characteristics without deteriorating initial discharge capacity.

### Method of Preparing Positive Active Material

In an embodiment, a method of preparing a positive active material for an all-solid-state battery includes mixing a lithium raw material, a nickel-based hydroxide, and a boron raw material and heat-treating the resultant.

Conventionally, when boron is coated on a positive active material, a lithium raw material is commonly mixed with a nickel transition metal composite hydroxide followed by heat-treating the resultant to prepare a lithium nickel-based composite oxide, and a boron source is mixed therewith by a wet or dry method followed by performing heat-treatment again. In this case, only the surface of the positive active material is coated with boron, and thus boron acts as a resistance, thereby reducing capacity and cycle-life. On the other hand, according to the preparing method according to an embodiment, a positive active material coated with boron not only on the surface of the positive active material but also on grain boundaries inside the positive active material may be obtained.

According to this method, a boron coating portion of the positive active material may function as a kind of buffer layer in an all-solid-state battery, suppress interface resistance of the positive active material with the solid electrolyte, accordingly, improving capacity characteristics of the all-solid-state battery. Furthermore, since the positive active material is also coated with boron at the inner grain boundaries, compared with a conventional active material having a coating layer or a buffer layer on the surface alone, performance of the buffer layer may be maintained despite the volume change of the positive active material during the charge and discharge, accordingly, improving long-term cycle-life characteristics of the all-solid-state battery.

In the above manufacturing method, the nickel-based hydroxide may be a nickel transition metal composite hydroxide as a precursor of the positive active material and prepared in a co-precipitation method and the like. The nickel-based hydroxide may have a structure that at least a portion of primary particles are radially oriented. This radially oriented structure is the same as described above.

The nickel-based hydroxide may be, for example, represented by Chemical Formula 11.

[Chemical Formula 11] Niₓ₁₁M¹¹_{y11}M¹²_{1-x11-y11}(OH)₂

In Chemical Formula 11, 0.3≤x11≤1, 0≤y11≤0.7, and M¹¹ and M¹² are independently selected from Al, B, Ba, Ca, Ce, Co, Cr, Cu, F, Fe, Mg, Mn, Mo, Nb, P, S, Si, Sr, Ti, V, W, Zr, and a combination thereof.

As a specific example, the nickel-based hydroxide may be represented by Chemical Formula 12 or Chemical Formula 13.

[Chemical Formula 12] Niₓ₁₂Co_{y12}M¹³_{1-x12-y12}(OH)₂

In Chemical Formula 12, 0.3≤x12<1, 0<y12≤0.7, and M¹³ is selected from Al, B, Ba, Ca, Ce, Cr, Cu, F, Fe, Mg, Mn, Mo, Nb, P, S, Si, Sr, Ti, V, W, Zr, and a combination thereof.

[Chemical Formula 13] Niₓ₁₃Co_{y13}M¹⁴_{z13}M¹⁵_{1-x13-y13-z13}(OH)₂

In Chemical Formula 13, 0.3≤x13≤0.98, 0.01≤y13≤0.69, 0.01≤z13≤0.69, M¹⁴ is selected from Al, Mn, and a combination thereof, and M¹⁵ is selected from B, Ba, Ca, Ce, Cr, Cu, F, Fe, Mg, Mo, Nb, P, S, Si, Sr, Ti, V, W, Zr, and a combination thereof.

The lithium raw material may be, for example, lithium hydroxide and the like, and may be mixed in a ratio of about 0.8 mole to about 1.8 mole, about 0.9 mole to about 1.8 mole, or about 0.8 mole to about 1.2 mole based on 1 mole of a total amount of metals of the nickel-based hydroxide.

The boron raw material may be a compound containing boron, for example, H₃BO₃, HBO₂, B₂O₃, C6H5B(OH)2, (C₆H₅O)₃B, [CH₃(CH₂)₃O]₃B, (C₃H₇O)₃B, C₃H₉B₃O₆, C₁₃H₁₉BO₃, or a combination thereof.

The content of the boron raw material may be about 0.1 mol% to about 3 mol%, for example about 0.1 mol% to about 2.9 mol%, about 0.1 mol% to about 2.5 mol%, about 0.1 mol% to about 2 mol%, about 0.1 mol% to about 1.5 mol%, or about 0.5 mol% to about 1.3 mol% based on 100 mol% of the nickel-based hydroxide. When the content of boron raw material satisfies the above range, boron does not act as a resistance in the positive active material and may serve to improve performance of an all-solid-state battery, thereby improving capacity and improving cycle-life characteristics. When the content of the boron raw material is excessive, the content of the first boron coating portion is excessively increased, and boron acts as a resistance in the positive active material, thereby reducing the capacity and cycle-life of the battery.

The heat-treating may be performed at a temperature of about 650 °C to about 850 °C, or about 690 °C to about 780 °C. In this case, a positive active material for an all-solid-state battery having a stable structure while including both the first boron coating portion and the second boron coating portion may be prepared.

In addition, the heat-treating may be performed for about 5 hours to about to 25 hours, for example, about 5 hours to about to 20 hours or about 8 hours to about 12 hours. In this case, a positive active material for an all-solid-state battery having a stable structure including both the first boron coating portion and the second boron coating portion is prepared.

### All-solid-state Battery

In an embodiment, an all-solid-state battery includes a positive electrode including the aforementioned positive active material, a negative electrode, and a solid electrolyte layer between the positive electrode and the negative electrode. The all-solid-state battery may also be expressed as an all-solid-state rechargeable battery.

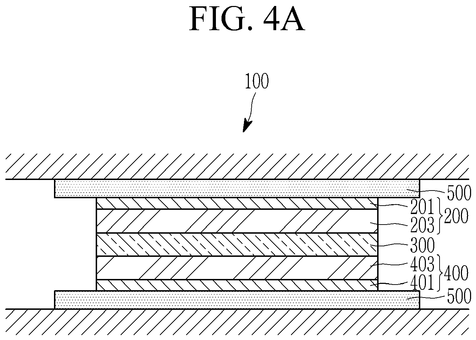

FIG. 4A is a cross-sectional view schematically illustrating an all-solid-state battery according to an embodiment. Referring to FIG. 4A, the all-solid-state battery 100 may have a structure that an electrode assembly, in which a negative electrode 400 including a negative current collector 401 and a negative active material layer 403, a solid electrolyte layer 300, and a positive electrode 200 including a positive active material layer 203 and a positive current collector 201 are stacked, is inserted into a case such as a pouch and the like. The all-solid-state battery 100 may further include at least one elastic layer 500 on the outside of at least either one of the positive electrode 200 and the negative electrode 400. FIG. 4A shows one electrode assembly including the negative electrode 400, the solid electrolyte layer 300, and the positive electrode 200, but two or more electrode assemblies may be stacked to manufacture an all-solid-state battery.

### Positive Electrode

A positive electrode for an all-solid-state battery may include a current collector and a positive active material layer on the current collector. The positive active material layer includes the aforementioned positive active material and may further include a binder, a conductive material, a dispersant, and/or a solid electrolyte.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% or about 0.5 wt% to about 3 wt% based on the total weight of the positive active material layer.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof. In the positive active material layer, the content of the conductive material may be about 0.1 wt% to about 5 wt%, or about 0.3 wt% to about 3 wt% based on the total weight of the positive active material layer.

The content of the solid electrolyte in the positive active material layer may be about 0 wt% to about 35 wt%, for example, about 0.1 wt% to about 35 wt%, about 1 wt% to about 35 wt%, about 5 wt% to about 30 wt%, about 8 wt% to about 25 wt%, or about 10 wt% to about 20 wt%. A detailed description of the type of the solid electrolyte will be described later in the description of the all-solid-state battery.

An aluminium foil may be used as the positive current collector, but the present disclosure is not limited thereto.

### Negative Electrode

The negative electrode for an all-solid-state battery may include, for example, a current collector and a negative active material layer on the current collector. The negative active material layer includes a negative active material, and may further include a binder, a conductive material, and/or a solid electrolyte.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be a weight ratio of about 99:1 to about 33:66. The silicon particles may be SiOₓ particles, and in this case, the range of x in SiOₓ may be greater than about 0 and less than about 2. In the present specification, unless otherwise defined, an average particle diameter (D50) indicates the diameter of a particle where an accumulated volume is about 50 volume% in a particle size distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. As the alkali metal, Na, K or Li may be used. The amount of the thickener used may be about 0.1 parts by weight to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

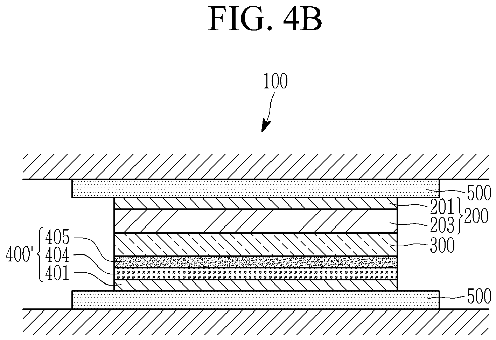

On the other hand, the negative electrode for an all-solid-state battery may be, for example, a precipitation-type negative electrode. The precipitation-type negative electrode may be a negative electrode which has no negative active material during the assembly of an electrochemical battery but in which a lithium metal and the like are precipitated during the charge of the electrochemical battery and serve as a negative active material. FIG. 4B is a schematic cross-sectional view of an all-solid-state battery including a precipitation-type negative electrode. Referring to FIG. 4B, the precipitation-type negative electrode 400' may include the negative current collector 401 and a negative electrode catalyst layer 405 disposed on the current collector. The rechargeable lithium battery having this precipitation-type negative electrode 400' starts to be initially charged in absence of a negative active material, and a lithium metal with high density and the like are precipitated between the negative current collector 401 and the negative electrode catalyst layer 405 during the charge and form a lithium metal layer 404, which may work as a negative active material. Accordingly, the precipitation-type negative electrode 400', in the all-solid-state battery which is more than once charged, may include the negative current collector 401, the lithium metal layer 404 on the current collector, and the negative electrode catalyst layer 405 on the lithium metal layer 404. The lithium metal layer 404 means a layer of the lithium metal and the like precipitated during the charge of the electrochemical battery and may be called a metal layer, a negative active material layer, or the like and act as a negative active material.

The negative electrode catalyst layer 405 may include a metal and/or a carbon material which plays a role of a catalyst.

The metal may include gold, platinum, palladium, silicon, silver, aluminium, bismuth, tin, zinc, or a combination thereof and may be composed of one selected therefrom or an alloy of more than one. The metal included in the negative electrode catalyst layer 405may have an average particle diameter (D50) of less than or equal to about 4 µm, for example, about 10 nm to about 4 µm.

The carbon material may be, for example, crystalline carbon, non-graphitic carbon, or a combination thereof. The crystalline carbon may be, for example, at least one selected from natural graphite, artificial graphite, mesophase carbon microbead, and a combination thereof. The non-graphite carbon may be at least one selected from carbon black, activated carbon, acetylene black, denka black, ketjen black, and a combination thereof.

When the negative electrode catalyst layer 405 includes the metal and the carbon material, the metal and the carbon material may be, for example, mixed in a weight ratio of about 1:10 to about 2:1. Herein, the precipitation of the lithium metal may be effectively promoted and improve characteristics of the all-solid-state battery. The negative electrode catalyst layer may include, for example, a carbon material on which a catalyst metal is supported or a mixture of metal particles and carbon material particles.

The negative electrode catalyst layer 405 may further include a binder, and the binder may be a conductive binder. In addition, the negative electrode catalyst layer 405 may further include general additives such as a filler, a dispersing agent, an ion conductive agent, and the like. In an embodiment, the negative electrode catalyst layer 405 may not include a negative active material.

The negative electrode catalyst layer 405 may have, for example, a thickness of about 1 µm to about 20 µm.

The precipitation-type negative electrode 400' may further include a thin film, for example, on the surface of the negative current collector 401, that is, between the negative current collector 401 and the negative electrode catalyst layer 405. The thin film may include an element capable of forming an alloy with lithium. The element capable of forming an alloy with lithium may be, for example, gold, silver, zinc, tin, indium, silicon, aluminium, bismuth, and the like, which may be used alone or an alloy of more than one. The thin film may further planarize a precipitation shape of the metal layer and much improve characteristics of the all-solid-state battery. The thin film may be formed, for example, in a vacuum deposition method, a sputtering method, a plating method, and the like. The thin film may have, for example, a thickness of about 1 nm to about 500 nm.

### Solid Electrolyte Layer

The solid electrolyte layer 300 includes a solid electrolyte, and the solid electrolyte may be an inorganic solid electrolyte such as a sulfide-based solid electrolyte or an oxide-based solid electrolyte, or a solid polymer electrolyte.

In an embodiment, the solid electrolyte may be a sulfide-based solid electrolyte having excellent ion conductivity. The sulfide-based solid electrolyte may be, for example, Li₂S-P₂S₅, Li₂S-P₂S₅-LiX (X is a halogen element, for example I or CI), Li₂S-P₂S₅-Li₂O, Li₂S-P₂S₅-Li₂O-LiI, Li₂S-SiS₂, Li₂S-SiS₂-LiI, Li₂S-SiS2-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n is each an integer and Z is Ge, Zn or Ga), Li₂S-GeS₂, Li₂S-SiS₂-Li₃PO₄, Li₂S-SiS₂-LiₚMO_{q} (p and q are integers and M is P, Si, Ge, B, Al , Ga, or In) and the like.

The sulfide-based solid electrolyte may be obtained by, for example, mixing Li₂S and P₂S₅ in a mole ratio of about 50:50 to about 90:10 or about 50:50 to about 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. The mixing may be performed by a mechanical milling method or a solution method. The mechanical milling method is to make starting materials into particulates by putting the starting materials, ball mills, and the like in a reactor and fervently stirring them. The solution method may be performed by mixing the starting materials in a solvent to obtain a solid electrolyte as a precipitate. In addition, after the mixing, firing may be additionally performed. When the additional firing is performed, the solid electrolyte may have much rigid crystals.

For example, the solid electrolyte may be an argyrodite-type sulfide-based solid electrolyte. The sulfide-based solid electrolyte may be, for example, LiₐM_{b}P_{c}S_{d}Aₑ (a, b, c, d, and e are all greater than or equal to about 0 and less than or equal to about 12, M is Ge, Sn, Si, or a combination thereof, and A is one of F, CI, Br, and I) and specifically, Li₃PS₄, Li₇P₃S₁₁, Li₆PS₅Cl, and the like. This sulfide-based solid electrolyte has high ionic conductivity close to about 10⁻⁴ to about 10⁻² S/cm, which is ionic conductivity of a general liquid electrolyte, at room temperature and thus, may form a close interface between the electrode layer and the solid electrolyte layer without deteriorating the ion conductivity. An all-solid-state rechargeable battery including the same may exhibit improved battery performance such as rate capability, coulomb efficiency, and cycle-life characteristics.

The sulfide-based solid electrolyte may be amorphous or crystalline, and may be in a mixed state.

The solid electrolyte may be an oxide-based inorganic solid electrolyte in addition to the sulfide-based material, and may include, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O5-TiO₂-GeO₂ based ceramics, Garnet based ceramics Li₃₊ₓLa₃M₂O₁₂ (M= Te, Nb, or Zr; x is an integer from 1 to 10), or a mixture thereof.

The solid electrolyte included in the solid electrolyte layer may be in the form of particles, and the average particle diameter (D50) thereof may be less than or equal to about 5.0 µm, for example, about 0.5 µm to about 5.0 µm. Such a solid electrolyte may form an intimate interface between the positive electrode layer and the solid electrolyte layer without causing a short circuit.

The solid electrolyte layer may further include a binder. Herein, the binder may include a styrene butadiene rubber, polytetrafluoroethylene, polyvinylidene fluoride, polyethylene, an acrylate-based polymer, or a combination thereof, but is not limited thereto. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. Since a forming process of the solid electrolyte layer is well known in the art, a detailed description thereof will be omitted.

A thickness of the solid electrolyte layer may be, for example, about 10 µm to about 150 µm.

The solid electrolyte layer may further include an alkali metal salt and/or an ionic liquid and/or a conductive polymer. For example, the solid electrolyte layer may further include a lithium salt and/or an ionic liquid and/or a conductive polymer.

A content of the lithium salt in the solid electrolyte layer may be greater than or equal to about 1 M, for example, about 1 M to about 4 M. In this case, the lithium salt may improve ionic conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCI, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoromethanesulfonyl)imide (LiTFSI, LiN(SO₂CF₃)₂), lithium bis(fluorosulfonyl)imide, (LiFSI, LiN(SO₂F)₂), LiCF₃SO₃, LiAsF₆, LiSbF₆, LiClO₄, or a mixture thereof. In addition, the lithium salt may be an imide-based salt, for example, the imide-based lithium salt may be lithium bis(trifluoromethanesulfonyl) imide (LiTFSI, LiN(SO₂CF₃)₂), and lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid may refers to a salt in a liquid state at room temperature or a room temperature molten salt that has a melting point of room temperature or lower and is only formed of ions. The ionic liquid may be a compound including: a) a cation selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a combination thereof; and b) an anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br-, I⁻, BF₄⁻, SO₄⁻, CF₃SO₃⁻, (FSO₂)₂N⁻, (C2F₅SO₂)₂N⁻, (C2F₅SO2)(CF₃SO₂)N⁻, and (CF₃SO₂)₂N⁻.

The ionic liquid may be, for example, at least one selected from the group consisting of N-methyl-N-propylpyrrolidinium bis(trifluoromethanesulfonyl)imide, N-butyl-N-methylpyrrolidinium bis(3-trifluoromethylsulfonyl)imide, 1-butyl-3-methylimidazolium bis(trifluoromethylsulfonyl)imide, 1-ethyl-3-methylimidazolium bis(trifluoromethylsulfonyl)imide, or a combination thereof.

A weight ratio of the solid electrolyte and the ionic liquid in the solid electrolyte layer may be about 0.1:99.9 to about 90:10, for example, about 10:90 to about 90:10, about 20:80 to about 90:10, about 30:70 to about 90:10, about 40:60 to about 90:10, or about 50:50 to about 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state battery may be improved.

The all-solid-state secondary battery may be a unit cell having a structure of a positive electrode/solid electrolyte layer/negative electrode, a bicell having a structure of positive electrode/solid electrolyte layer/negative electrode/solid electrolyte layer/positive electrode, or a stacked battery in which the structure of the unit cell is repeated.

The shape of the all-solid-state battery is not particularly limited, and may be, for example, a coin type, a button type, a sheet type, a stack type, a cylindrical shape, a flat type, and the like. In addition, the all-solid-state battery may be applied to a large-sized battery used in an electric vehicle or the like. For example, the all-solid-state battery may also be used in a hybrid vehicle such as a plug-in hybrid electric vehicle (PHEV). In addition, it may be used in a field requiring a large amount of power storage, and may be used, for example, in an electric bicycle or a power tool.

Hereinafter, examples of the present invention and comparative examples are described. It is to be understood, however, that the examples are for the purpose of illustration and are not to be construed as limiting the present invention.

### Example 1

### 1. Preparation of Positive Active Material Precursor

A nickel-based hydroxide Ni_{0.91}Co_{0.09}(OH)₂ is synthesized in a co-precipitation method, which is described later. As a metal raw material, nickel sulfate and cobalt sulfate are used. A reaction system uses a batch reactor with an effective reaction volume of 85.5 L and a concentration system allowing continuous removal of a solution other than co-precipitates.

### [First step: 4.5 kW/m', NH₄OH 0.25 M, pH 11.8 to 12.0, and reaction time of 6 hours]

First, ammonia water having a concentration of 0.25 M is put in a reactor. While metal raw materials and a complex agent (NH₄OH) are added thereto respectively at 107 ml/min and 25 ml/min at 50 °C under a stirring power of 4.5 kW/m', a reaction is started. While NaOH is added thereto to maintain pH, the reaction is performed for 6 hours. After confirming that the particle size obtained as a result of the reaction continues to decrease for up to 6 hours to form a core, the second step is performed as follows.

### [Second step: 3.5 kW/m', NH₄OH 0.30 M, pH 11.8 to 12.0, and reaction time of 15 hours]

The metal raw materials and the complex agent are added thereto respectively at 142 ml/min and 33 ml/min, while the reaction temperature is maintained at 50 °C, so that the complex agent maintained a concentration of 0.30 M. While adding NaOH thereto in order to maintain pH, the reaction is performed for 15 hours. At this time, the stirring power is lowered to 3.5 kW/m', which is lower than the first step, and the reaction proceeds. After confirming that the obtained product containing a core and a surface layer has an average size of 3.5 µm to 3.8µm, the reaction is terminated.

### [Post-process]

The obtained resulting material is washed and then, dried with hot air at about 150 °C for 24 hours, obtaining a nickel-based hydroxide Ni_{0.91}Co_{0.09}(OH)₂.

### 2. Preparation of Positive Active Material

The obtained nickel-based hydroxide is mixed with LiOH in a mole ratio of 1:1, and 1.0 mol% of boric acid is added thereto based on 100 mol% of the nickel-based hydroxide and then, heat-treated at 725 °C for 10 hours under an oxygen atmosphere, obtaining a positive active material (LiNi_{0.91}Co_{0.09}O₂) in which a boron compound is coated at the inner grain boundaries and on the surface.

### 3. Manufacture of Positive Electrode

85 wt% of the obtained positive active material, 13.5 wt% of a lithium argyrodite-type solid electrolyte Li₆PS₅Cl, 1.0 wt% of a binder, 0.4 wt% of carbon nanotube conductive material, and 0.1 wt% of a dispersing agent are added to an isobutyl isobutyrate (IBIB) solvent, and 2 mm zirconia balls are added thereto and then, stirred with a Thinky mixer, preparing slurry. The slurry is coated on a positive current collector and then, dried to manufacture a positive electrode.

### 4. Manufacture of Solid Electrolyte Layer

Isobutyl isobutyrate (IBIB) as a binder solution is added to an argyrodite-type solid electrolyte Li₆PS₅Cl and then, mixed. Herein, the mixture is stirred with a Thinky mixer to adjust to an appropriate viscosity. After adjusting the viscosity, 2 mm zirconia balls are added thereto and then, stirred again with the Thinky mixer, preparing slurry. The slurry is cast on a release PET film and dried at room temperature to form a solid electrolyte layer.

### 5. Manufacture of Negative Electrode

A negative electrode is prepared as a precipitation-type by coating carbon, on which Ag as a catalyst is supported, as a slurry on a negative current collector and drying it.

### 6. Manufacture of All-solid-state Battery Cell

The positive electrode, the negative electrode, and the solid electrolyte layer are cut, and after stacking the solid electrolyte on the positive electrode, and the negative electrode is stacked thereon. The stacked product is sealed into a pouch form and warm-isostatic pressed (WIP) with 500 MPa for 30 minutes at a high temperature, obtaining an all-solid-state battery cell.

### Example 2

A positive active material and an all-solid-state battery cell are manufactured according to the same method as Example 1 except that aluminum nitrate as a metal raw material is further used to obtain Ni_{0.945}Co_{0.04}Al_{0.015}(OH)₂ in preparing the positive active material precursor of Example 1, and Ni_{0.945}Co_{0.04}Al_{0.015}(OH)₂ is used as a positive active material precursor, and 0.5 mol% of boric acid is added thereto and then, heat-treated at 700 °C in preparing the positive active material of Example 1.

### Comparative Example 1

A positive active material is prepared according to the same method as Example 1 except that boric acid is not added in preparing the positive active material of Example 1. The positive active material is mixed with lithium ethoxide and zirconium propoxide in ethanol to form a Li₂O·ZrO₂-type buffer layer on the surface through spray-drying capable of recovering organic solvents without contact with external air. Subsequently, a positive electrode and an all-solid-state battery cell are manufactured according to the same method as Example 1.

### Comparative Example 2

A positive active material and an all-solid-state battery cell are manufactured according to the same method as Example 1 except that a positive active material precursor is prepared according to the following method, and boric acid is not added in preparing the positive active material.

Ni_{0.91}Co_{0.09}(OH)₂, which is a nickel-based hydroxide, is synthesized by using a continuous stirred tank reactor (CSTR), which is generally used in the industry. An effective reaction volume is 83 L. As for the metal raw materials, nickel sulfate and cobalt sulfate are used.

First, ammonia water at a concentration of 0.35 M is put in a reactor. Then, a reaction is started with a stirring power of 3.0 kW/m' at a reaction temperature of 50 °C, while the metal raw materials and a complex agent (NH₄OH) are injecting thereinto respectively at 71 ml/min and 25 ml/min.The positive active material precursor is obtained after conducting the reaction for 30 hours, while NaOH is injected thereinto in order to maintain pH.

### Comparative Example 3

After preparing a LiNi_{0.91}Co_{0.09}O₂ active material not coated with a boron compound without adding boric acid in preparing the positive active material of Example 1, the boron compound is coated on the LiNi_{0.91}Co_{0.09}O₂ active material in a conventional method. In other words, LiNi_{0.91}Co_{0.09}O₂ is mixed with 1.0 mol% of boric acid and then, secondarily heat-treated at 350 °C for 8 hours under an oxygen atmosphere, obtaining a positive active material coated with the boron compound on the surface. Then, a positive electrode and an all-solid-state battery cell are manufactured according to the same method as Example 1 except the obtained positive active material is used as a positive active material.

### Evaluation Example 1: SEM Photograph

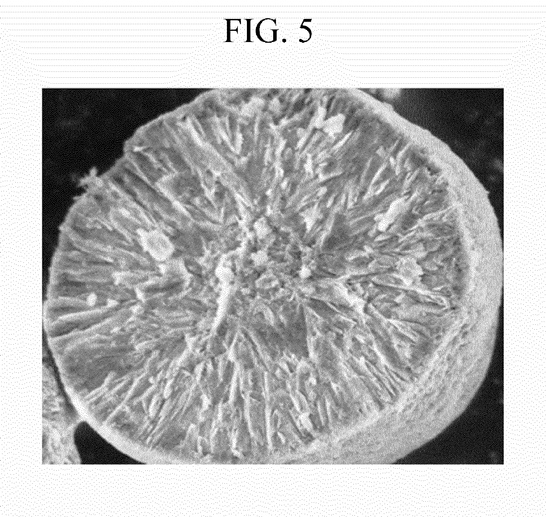

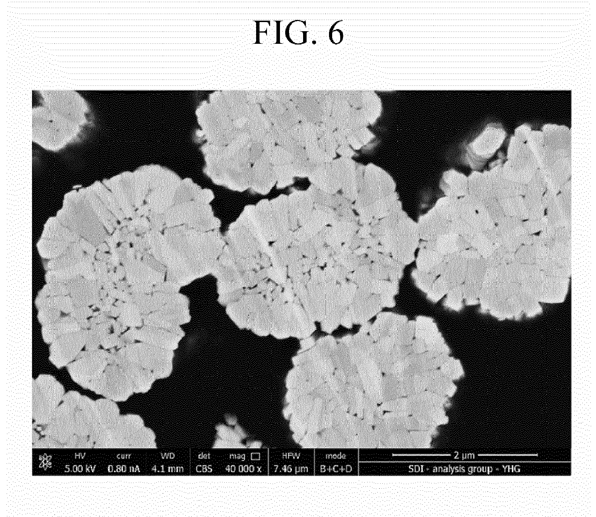

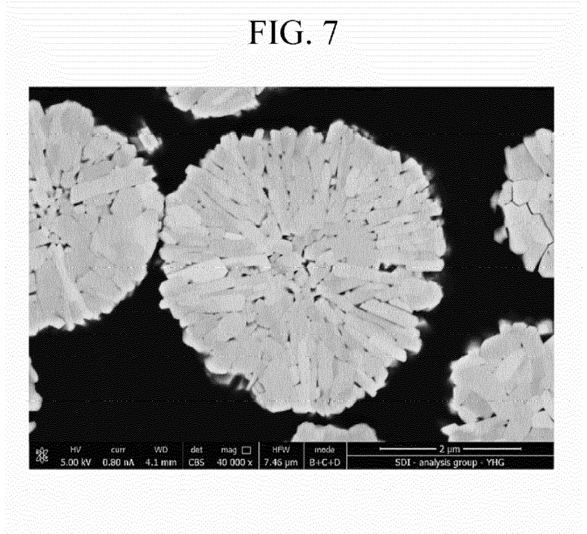

FIG. 5 is a scanning electron microscopic photograph showing the fracture surface of the precursor of the positive active material of Example 1, which has a pore layer in the center and a surface portion in which primary particles are radially oriented on the surface of secondary particles. In addition, since the surface is porous and easily contracted, as shown in FIGS. 6 to 7, the small primary particles maintain the radially oriented structure after the positive active material is prepared.

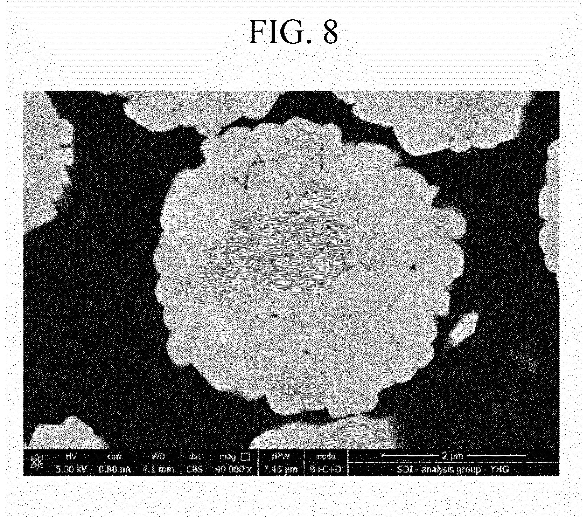

FIG. 8 is a cross-section photograph of the synthesized positive active material according to Comparative Example 2, which shows that when general precursors are synthesized without adding boron thereto, the primary particles are large and have no radially oriented structure.

### Evaluation Example 2: Components on the Surface of Active Material

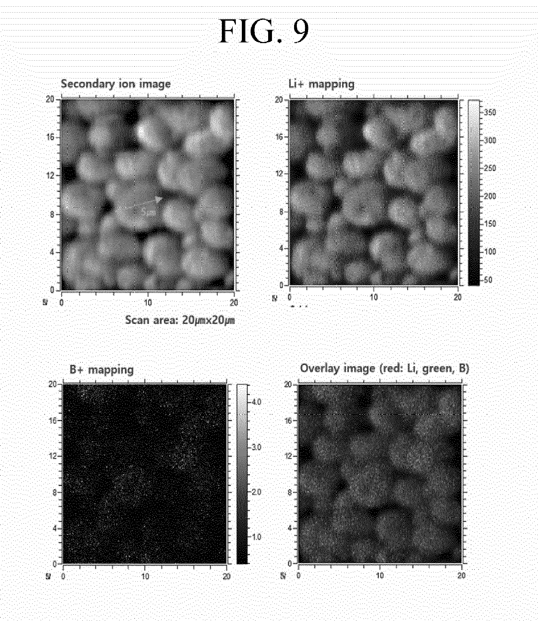

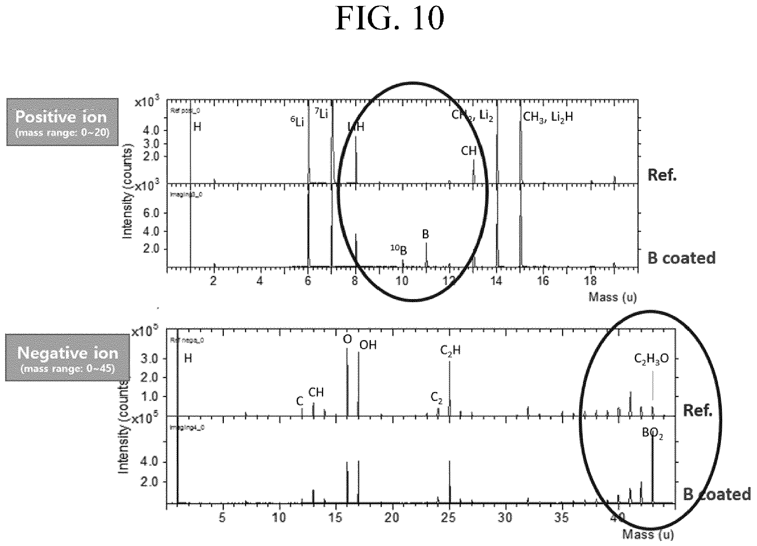

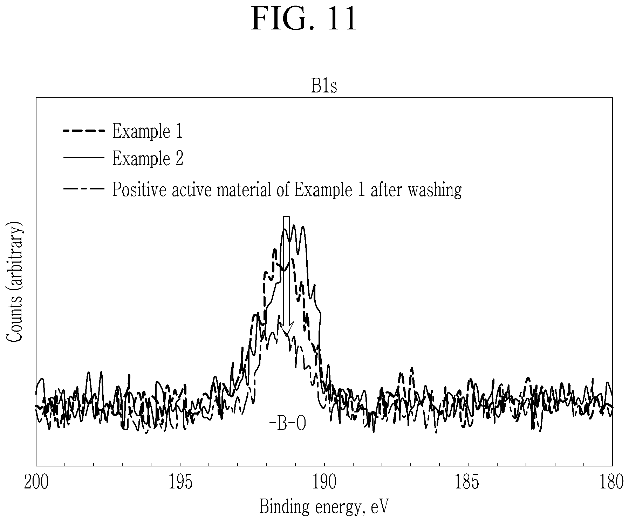

FIG. 9 is a ToF-SIMS (Time-of-Flight Secondary Ion Mass Spectrometry) analysis photograph, FIG. 10 is a mass spectrum result of the ToF-SIMS analysis, and FIG. 11 is an XPS analysis (X-ray Photoelectron Spectroscopy) result.

As shown in FIG. 11, an B-O bond is confirmed by analyzing binding energy, which turns out to be lithium borate through the literature review.

FIG. 9 shows that lithium borate is evenly distributed on the surface of the positive active material by mapping lithium, boron, and also, lithium and boron at the same time. In addition, the mass analysis result of FIG. 10 shows that BO₂ is abundant.

Combining the results of FIGS. 9 to 11, the lithium boron compound is evenly coated on the surface of the secondary particles of the positive active material, and LiBO₂ is a main component.

### Evaluation Example 3: Evaluation of Boron Content on Surface and Inner Grain Boundary of Positive Active Material

ICP (inductively coupled plasma) emission spectroscopic analysis is performed on the positive active material prepared in Example 1 to measure the content of boron. 10 g of each positive active material is added to 100 g of distilled water and then, stirred for 30 minutes and filtered with a filter to obtain the positive active material. Through this washing process, boron on the surface of the positive active material is all removed. The recovered positive active material is dried at 130 °C for 24 hours and then, measured with respect to a boron content through an ICP emission spectroscopic analysis again, and this boron content is expressed as a content of boron present in the inner portion of the positive active material, that is, on the grain boundaries. In addition, a difference obtained by subtracting the boron content after the washing from the boron content before the washing, that is, a boron content removed through the washing is expressed as a boron content on the surface of the positive active material. In Table 1, the unit ppm may mean 10⁻⁴ wt%, and may mean the ratio of the weight of boron to the total weight of the positive active material.

**(Table 1)**

| | Boron content before washing (ppm) | Boron content at the inner grain boundary (ppm) | Boron content on the surface (ppm) |
|---|---|---|---|
| Example 1 | 940 | 185 | 755 |
| Example 2 | 540 | 30 | 510 |
| Comparative Example 3 | 1,020 | 0 | 1,020 |

In Table 1, the boron content on the surface indicates that of the first boron coating portion, a boron content at the inner grain boundary indicates that of the second boron coating portion. Referring to Table 1, the boron content of the first boron coating portion in Example 1 is 0.0755 wt% based on a total weight of the positive active material, and the boron content of the second boron coating portion is 0.0185 wt% based on the total weight of the positive active material. In addition, a weight ratio of the first boron coating portion and the second boron coating portion is calculated to be about 80:20. Furthermore, the first boron coating portion and the second boron coating portion of Example 2, in which 50% of the boron content of Example 1 is added, are calculated to have a weight ratio of about 94:6. In addition, Comparative Example 3 using the conventional boron coating shows that boron is not coated inside the secondary particles of the positive active material.

### Evaluation Example 4: Evaluation of Initial Discharge Capacity

The all-solid-state battery cells according to the examples and the comparative examples are charged up to an upper limit voltage of 4.25 V at a constant current of 0.1 C and discharged down to a discharge cut-off voltage of 2.5 V at a constant current of 0.1 C at 45 °C and measured with respect to initial discharge capacity, and the results are shown in Table 2. Referring to Table 2, Comparative Example 2 using no positive active material according to an embodiment and forming no buffer layer exhibits greatly low initial discharge capacity, but Example 1 realizes higher initial discharge capacity even than Comparative Example 1 forming a buffer layer. In addition, in Comparative Example 3 coating boron only on the surface of the secondary particles, boron acts resistance and thus greatly deteriorates initial charge and discharge capacity, simultaneously.

**(Table 2)**

| | Initial Charge capacity (mAh/g) | Initial Discharge capacity (mAh/g) | I.C.E (%) |
|---|---|---|---|
| Example 1 | 233 | 213 | 91 |
| Example 2 | 235 | 215 | 91 |
| Comparative Example 1 | 230 | 188 | 82 |
| Comparative Example 2 | 226 | 176 | 78 |
| Comparative Example 3 | 223 | 182 | 81 |

### Evaluation Example 5: Evaluation of Cycle-life Characteristics

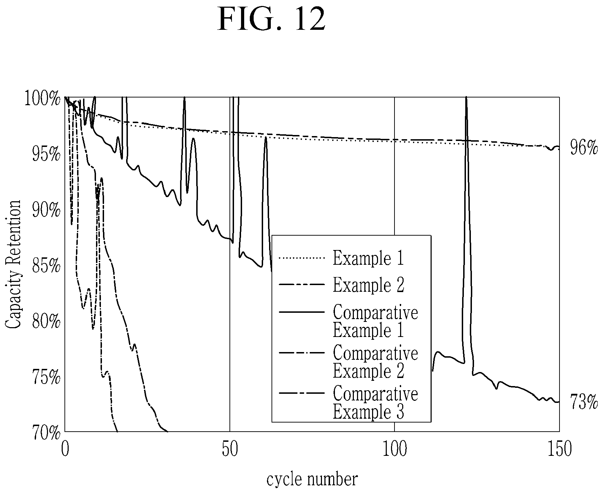

The all-solid-state battery cells of the examples and the comparative examples, which are initially charged and discharged in Evaluation Example 4, are 150 times repeatedly charged and discharged at a constant current of 0.33 C within a voltage range of 2.5 V to 4.25 V at 45 °C and evaluated with respect to cycle-life characteristics, and the results are shown in FIG. 12. Referring to FIG. 12, Comparative Examples 2 and 3 exhibit sharp cycle-life deterioration, but Examples 1 and 2 maintain more excellent capacity than Comparative Example 1 forming a buffer layer in the conventional method. Accordingly, Examples 1 and 2 exhibit excellent cycle-life characteristics.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 11: | secondary particle | | |
| 12: | inner portion of secondary particle | | |
| 13: | primary particle | | |
| 14: | outer portion of secondary particle | | |
| 100: | all-solid-state battery | 200: | positive electrode |
| 201: | positive current collector | 203: | positive active material layer |
| 300: | solid electrolyte layer | 400: | negative electrode |
| 401: | negative current collector | 403: | negative active material layer |
| 400': | precipitation-type negative electrode | | |
| 404: | lithium metal layer | | |
| 405: | negative electrode catalyst layer | | |
| 500: | elastic layer | | |

## Claims

1. A positive active material for an all-solid-state battery, comprising a lithium nickel-based composite oxide, and comprising:
a secondary particle in which a plurality of primary particles is aggregated, wherein at least a portion of the primary particles is arranged radially,
a first boron coating portion on a surface of the secondary particle, and
a second boron coating portion on a surface of the primary particles inside the secondary particle.

2. The positive active material of claim 1, wherein each of the first boron coating portion and the second boron coating portion comprises boron oxide, lithium borate, or a combination thereof.

3. The positive active material of claim 1 or claim 2, wherein a weight of the first boron coating portion is greater than a weight of the second boron coating portion.

4. The positive active material of any one of claims 1 to 3, wherein the first boron coating portion is included in an amount of 70 wt% to 98 wt%, and the second boron coating portion is included in an amount of 2 wt% to 30 wt% based on the total amount of the first boron coating portion and the second boron coating portion.

5. The positive active material of any one of claims 1 to 4, wherein a content of the first boron coating portion is 0.02 wt% to 0.3 wt% based on the total weight of the positive active material.

6. The positive active material of any one of claims 1 to 5, wherein a content of the second boron coating portion may be 0.001 wt% to 0.05 wt% based on the total weight of the positive active material.

7. The positive active material of any one of claims 1 to 6, wherein a total amount of the first boron coating portion and the second boron coating portion is 0.1 mol% to 3 mol%, based on 100 mol% of the positive active material, optionally wherein:
a total amount of the first boron coating portion and the second boron coating portion is 0.1 mol% to 1.5 mol%, based on 100 mol% of the positive active material.

8. The positive active material of any one of claims 1 to 7, wherein the primary particles have a plate shape, and at least a portion of the plate-shaped primary particles has a long axis arranged in a radial direction, optionally wherein:
an average length of the plate-shaped primary particles is 150 nm to 500 nm, an average thickness of the plate-shaped primary particles is 100 nm to 200 nm, and a ratio of the average thickness to the average length is 1:2 to 1:5.

9. The positive active material of any one of claims 1 to 8, wherein
(i) the secondary particle comprises an inner portion including an irregular porous structure and an outer portion including a radially arranged structure; and/or
(ii) the inner portion of the secondary particle has a larger pore size than the outer portion,
the pore size in the inner portion of the secondary particle is 150 nm to 1 µm, and
the pore size in the outer portion of the secondary particle is less than 150 nm; and/or
(iii) the secondary particle comprises open pores having a size of less than 150 nm on the surface, facing toward the center of the secondary particle, and formed to a depth of less than or equal to 150 nm.

10. The positive active material of any one of claims 1 to 9, wherein the lithium nickel-based composite oxide is represented by Chemical Formula 1:
[Chemical Formula 1] Liₐ₁Niₓ₁M¹_{y1}M²_{1-x1-y1}O₂
wherein, in Chemical Formula 1, 0.9≤a1≤1.8, 0.3≤x1≤1, 0≤y1≤0.7, and M¹ and M² are each independently selected from Al, B, Ba, Ca, Ce, Co, Cr, Cu, F, Fe, Mg, Mn, Mo, Nb, P, S, Si, Sr, Ti, V, W, Zr, and a combination thereof.

11. A method of preparing a positive active material for an all-solid-state battery comprising
mixing a lithium raw material, a nickel-based hydroxide, and a boron raw material and
heat-treating the resultant to obtain the positive active material of any one of claims 1 to 10.

12. The method of claim 11, wherein:
(i) a content of the boron raw material is 0.1 mol% to 3 mol% based on 100 mol% of the nickel-based hydroxide; and/or
(ii) the heat-treating is performed at a temperature of 650 °C to 850 °C for 5 hours to 20 hours.

13. An all-solid-state battery, comprising
a positive electrode including the positive active material of any one of claims 1 to 10, a negative electrode and a solid electrolyte layer between the positive electrode and the negative electrode.

14. The all-solid-state battery of claim 13, wherein
the positive electrode comprises a current collector and a positive active material layer on the current collector, the positive active material layer comprises the positive active material and a solid electrolyte, and
the solid electrolyte is included in an amount of 0.1 wt% to 35 wt% based on the total weight of the positive active material layer.

15. The all-solid-state battery of claim 13 or claim 14, wherein:
(i) the negative electrode comprises a current collector and a negative active material layer or a negative electrode catalyst layer which is disposed on the current collector; or
(ii) the negative electrode comprises a current collector and a negative electrode catalyst layer on the current collector, and
the negative electrode comprises a lithium metal layer formed during initial charging between the current collector and the negative electrode catalyst layer.
